## Europäisches Patentamt

## European Patent Office

## Office européen des brevets

(11) Veröffentlichungsnummer: **0 047 839**
A2

(12) **EUROPÄISCHE PATENTANMELDUNG**

(21) Anmeldenummer: 81105659.7

(22) Anmeldetag: 18.07.81

(51) Int. Cl.³: **B 29 F 3/00**
B 29 F 3/02

(30) Priorität: 28.08.80 DE 3032347

(43) Veröffentlichungstag der Anmeldung:
24.03.82 Patentblatt 82/12

(84) Benannte Vertragsstaaten:
DE FR GB IT

(71) Anmelder: Gebr. Happich GmbH
Postfach 10 02 49 Clausenbrücke 1
D-5600 Wuppertal 1(DE)

(72) Erfinder: Fritsch, Gunter, Dipl.-Ing.
Severinghauser Strasse 12
D-5828 Ennepetal 18(DE)

(72) Erfinder: Vollmer, Heinz
Clausenstrasse 23
D-5600 Wuppertal 2(DE)

(72) Erfinder: Schmitz, Walter-Alfred
Frankenplatz 12
D-5600 Wuppertal 1(DE)

(74) Vertreter: Rehders, Jochen
c/o Fa. Gebr. Happich GmbH Postfach 10 02 49
Clausenbrücke 1
D-5600 Wuppertal 1(DE)

(54) Verfahren zum Herstellen einer extrudierten Kunststoff-Profilleiste sowie Vorrichtung zum Durchführen des Verfahrens.

(57) Das Verfahren sieht das Herstellen einer extrudierten Kunststoff-Profilleiste (9) vor, deren Oberfläche zumindest eine in Längsrichtung durchlaufende Mattzone aufweist.

Für die Erzeugung der Mattzone sieht das Verfahren vor, daß innerhalb des Extrusionswerkzeuges (1), und zwar unmittelbar im Austrittsbereich desselben, die Umfangsfläche der Profilleiste (9) bereichsweise unterschiedlichen Temperaturen ausgesetzt wird.

Die Vorrichtung zum Durchführen des Verfahrens besteht aus einem Extrusionswerkzeug (1), das am austrittsseitigen Endbereich in zumindest zwei, jeweils bereichsweise mit der durchlaufenden Profilleiste (9) in Berührung stehende unabhängig voneinander temperierbare Zonen unterteilt ist, wobei eine der Zonen aus einem Werkzeugeinsatz (6) bestehen kann, der in eine Ausnehmung (5) am Randbereich der Werkzeugöffnung (2) eingesetzt ist.

Fig. 1

- 1 -

H 896/897                           13.5.81 Pom/Sch.


GEBR. HAPPICH GMBH, D 56oo WUPPERTAL
Bundesrepublik Deutschland


**Verfahren zum Herstellen einer extrudierten Kunststoff-Profilleiste sowie Vorrichtung zum Durchführen des Verfahrens**

Die Erfindung bezieht sich auf ein Verfahren der im Oberbegriff des Anspruchs 1 angegebenen Art sowie auf eine Vorrichtung zum Durchführen des Verfahrens.

Kunststoff-Profilleisten, die beispielsweise an Kraftfahrzeugen in erheblichem Umfange als Rammschutzleisten, insbesondere aber als Zierleisten zur Anwendung gelangen, besitzen im allgemeinen eine farblich gleichmäßige Oberfläche. Je nach Materialzusammensetzung und Fahrttemperatur des Extruders können die Profilleisten dabei eine glänzende bis hochglänzende oder auch eine matte Oberfläche aufweisen. Es befinden sich auch schon Profilleisten im Einsatz, deren Oberfläche farbige Längsstreifen besitzen.

- 2 -

Von den Endabnehmern werden in ständig zunehmendem Maße nun solche Profilleisten gefordert, deren Oberfläche zumindest eine in Längsrichtung durchlaufende Mattzone aufweisen. Die Mattzone wird insbesondere bei Profilleisten mit farbigen Längsstreifen gefordert, wobei die Oberfläche der farbigen Längsstreifen gegenüber der verbleibenden Oberfläche matt sein soll.

Es wird bereits eine extrudierte Zierleiste aus einem durchsichtigen bzw. durchscheinenden Kunststoff angeboten, die mit einem farbigen Längsstreifen und in diesem Bereich matter Oberfläche ausgebildet ist. Die Herstellung der bekannten Zierleiste erfolgt durch Co-Extrusion, also unter dem Einsatz eines zweiten, exakt auf das gewünschte Oberflächenaussehen eingestellten Kunststoffmaterials. Durch Co-Extrusion läßt sich zwar eine Profilleiste mit unterschiedlichen Glanzgraden fertigen, jedoch ist hierfür ein relativ aufwendiges Extrusionswerkzeug und ein zusätzlicher Extruder erforderlich, so daß die Fertigungskosten erheblich sind.

In der DE-OS 2o 4o 713 wird die Möglichkeit erwähnt, eine matte Oberfläche bei einem Kunststoff-Formkörper durch Überziehen des Formkörpers mit einem Mattlack zu erzeugen. Es erscheint schwierig, diese Möglichkeit auf Kunststoff-Profilleisten, bei denen nur eine begrenzte streifenförmige Mattzone erzeugt werden soll, zu übertragen. Zumindest würde dies einen zusätzlichen, störanfälligen Arbeitsgang erfordern und auch Probleme in bezug auf die Haftung des Mattlackes auf der Oberfläche der Profilleisten aufwerfen.

Weiterhin wird in der DE-OS 2o 4o 713 die Möglichkeit aufgezeigt, bei Kunststoff-Formkörpern eine matte Oberfläche dadurch zu erzeugen, daß die Oberfläche des Formwerkzeuges, das für die Herstellung verwendet wird, beispielsweise durch Anätzen mattiert wird. Diese Maßnahme mag bei der Herstellung von Kunststoff-Formkörpern durch Umformen den gewünschten Erfolg bringen, würde aber bei einer Übertragung auf ein Extrusionswerkzeug dazu führen, daß die damit gefertigten Profilleisten eine aufgerissene Oberfläche aufweisen.

Es ist auch bekannt, auf die Oberfläche von Rohren farbige Streifen aufzubringen, wobei nach der DE-AS 12 38 196 so verfahren wird, daß die Streifen unmittelbar nach dem Austreten des Rohres aus dem Extruder unter leichtem Druck auf die in plastischem Zustand befindliche Rohroberfläche gepreßt werden. Dieses bekannte Verfahren verlangt die separate Fertigung, Lagerhaltung und Bereitstellung von farbigen Streifen sowie den Einsatz einer Vorrichtung zum Aufbringen der Streifen und dürfte aus diesen Gründen das Endprodukt nicht unwesentlich verteuern.

Es ist nun bei diesem vorgegebenen Stand der Technik Aufgabe der Erfindung, ein Verfahren der eingangs genannten Art und eine Vorrichtung zu dessen Durchführung zu schaffen, mit denen eine besonders einfache, problemlose und kostengünstige Erzeugung von mindestens einer in Längsrichtung durchlaufenden Mattzone an der Oberfläche einer Kunststoff-Profilleiste ermöglicht wird.

Das zur Lösung dieser Aufgabe gefundene Verfahren ist in Anspruch 1 charakterisiert, während die zur Lösung der Aufgabe vorgesehene Vorrichtung in den Ansprüchen 2 bis 4 gekennzeichnet ist.

Bei der Herstellung von extrudierten Kunststoff-Profilen können Verarbeitungsfehler auftreten, wobei Bläschen an der Oberfläche oder dunkle Verfärbungen auf eine zu hohe Arbeitstemperatur, während rauhe Oberflächen auf eine zu geringe Arbeitstemperatur schließen lassen. Aus diesem Grunde wird gemäß der Erfindung das Profil bei der optimalen Arbeitstemperatur extrudiert, und es erfolgt die Temperaturbeeinflussung der Profilleistenoberfläche unmittelbar im Austrittsbereich des Extrusionswerkzeuges, womit, wie
Fahrversuche gezeigt haben, der angestrebte Erfolg in
optimaler Weise erzielt wird.

Die besonderen Vorteile des erfindungsgemäßen Verfahrens
bestehen somit darin, daß nunmehr extrudierte Kunststoff-
Profilleisten, unabhängig davon, ob sie glasklar oder
farbig eingestellt oder ob sie mit oder ohne eingelagerte
Zierstreifen ausgebildet sind, mit einem oder mehreren
exakt begrenzten Mattstreifen hergestellt werden können,
wozu es lediglich der gezielten erfindungsgemäßen Wärmetrennung bedarf. Durch die Erfindung ist es möglich, die
Oberfläche einer aus relativ matt eingestelltem Kunststoffmaterial gebildeten Profilleiste mittels einer entsprechenden gezielten Wärmezufuhr bereichsweise glänzend bis hochglänzend zu gestalten, wie es ebenso möglich ist, bei aus
glänzend eingestelltem Kunststoffmaterial hergestellten
Profilleisten Mattstreifen an der Oberfläche durch entsprechendes gezieltes Kühlen zu bilden.

Die erfindungsgemäße Vorrichtung verlangt lediglich eine
minimale Änderung und Ergänzung des Extrusionswerkzeuges,
so daß nur geringe Kosten entstehen, die das Endprodukt
praktisch nicht belasten. Insgesamt gesehen löst die
Erfindung die gestellte Aufgabe mit geringstmöglichem Aufwand.

Die Erfindung wird nachfolgend anhand der Zeichnung beispielhaft erläutert. Es zeigen

Fig. 1 einen Schnitt durch einen Teilbereich der
Vorrichtung und

Fig. 2 den Querschnitt einer mittels der Vorrichtung
nach Fig. 1 hergestellten Kunststoff-Profilleiste.

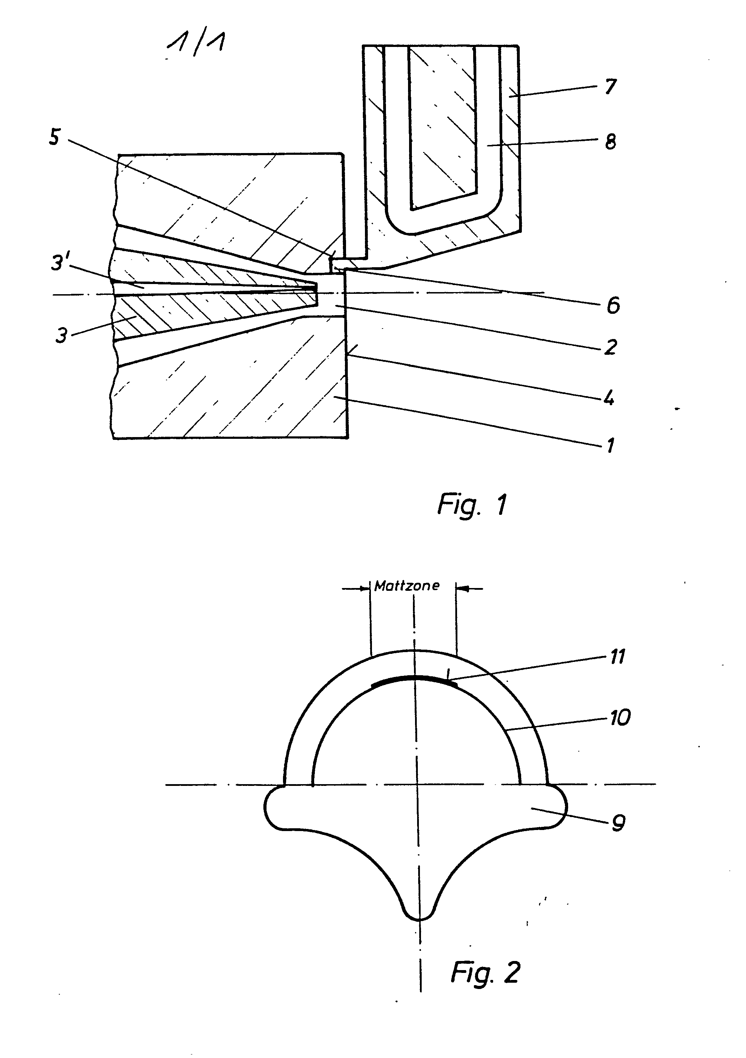

Fig. 1 zeigt den Querschnitt eines zu einem nicht gezeigten üblichen Extruder gehörenden Extrusionswerkzeuges 1 mit einer in der Werkzeugöffnung 2 angeordneten Führung 3 für eine Zierfolie 10. Am austrittsseitigen Stirnende 4 des Extrusionswerkzeuges 1 ist eine den Randbereich der Werkzeugöffnung 2 erweiternde Ausnehmung 5 eingearbeitet. In die Ausnehmung 5 greift das freie Ende eines Werkzeugeinsatzes 6 derart ein, daß sich ein planer Abschluß der Werkzeugöffnungswandung ergibt.

Der Werkzeugeinsatz 6 ist einstückig und materialeinheitlich mit einem Vorsatzelement 7 ausgebildet, welches aus einem hochwärmeleitfähigen Material, wie Kupfer od. dgl. besteht. Im Vorsatzelement 7 ausgebildete Kanäle 8 dienen zum Durchlauf eines Mediums, über das der Werkzeugeinsatz 6 temperiert wird. Die Temperatur des die Kanäle 8 durchlaufenden Mediums kann über einen nicht gezeigten Regelkreis in gewünschter Weise konstant gehalten werden.

Fig. 2 zeigt einen möglichen Querschnitt einer nach dem erfindungsgemäßen Verfahren hergestellten Profilleiste 9. Diese besteht aus einem z. B. glasklaren PVC (Polyvinylchlorid) und weist eine darin eingelagerte Zierfolie 10 aus Metall oder Kunststoff auf. Die Zierfolie 10 ist mit einem farbigen Lackauftrag 11 versehen. Außer der als solche bezeichneten Mattzone ist die Oberfläche der Profilleiste 9 hochglänzend.

Bei der Herstellung der Profilleiste 9 wird so verfahren, daß die Zierfolie 10 vor dem Einlauf in den nicht gezeigten Extruder mit dem Lackauftrag 11 versehen und zusammen mit diesem durch den Extruder geführt wird, wobei die Formgebung über die mit einem entsprechenden Durchlaßschlitz 3' versehene Führung 3 erfolgt. Die aus dem Extrusionswerkzeug 1 heraustretende Profilleiste 9 steht mit ihrer Oberfläche in gleitender Reibung mit der Werkzeugöffnungswandung, wovon, wie schon weiter oben erwähnt, der Werkzeugeinsatz 6 ein Teilbereich ist. Bestehen nun zwischen dem in üblicher Weise beheizten Extrusionswerkzeug 1 und dem Werkzeugeinsatz 6 unterschiedliche Temperaturen, so wird die Oberfläche der aus dem Extrusionswerkzeug 1 austretenden Profilleiste 9 eben solchen unterschiedlichen Temperaturen ausgesetzt, wodurch sich für die Oberfläche unterschiedliche Glanzgrade ergeben. Bei einer Wärmetrennung zwischen Extrusionswerkzeug 1 und Werkzeugeinsatz 6, beispielsweise durch Kühlen des letzteren, wird erreicht, daß die mit dem Werkzeugeinsatz 6 in Berührung kommende Oberflächenzone der Profilleiste 9 das Extrusionswerkzeug 1 mit einem matten Oberflächenbild verläßt. Dadurch wirkt dann auch der darunter liegende Lackauftrag 11 matt, was sehr erwünscht ist.

0047839

- 7 -

Patentansprüche

1. Verfahren zum Herstellen einer extrudierten Kunststoff-Profilleiste, deren Oberfläche zumindest eine in Längsrichtung durchlaufende Mattzone aufweist, dadurch gekennzeichnet, daß innerhalb des Extrusionswerkzeuges, und zwar unmittelbar im Austrittsbereich desselben, die Umfangsfläche der Profilleiste bereichsweise unterschiedlichen Temperaturen ausgesetzt wird.

2. Vorrichtung zum Durchführen des Verfahrens nach Anspruch 1, gekennzeichnet durch ein Extrusionswerkzeug (1), das am austrittsseitigen Endbereich in zumindest zwei, jeweils bereichsweise mit der durchlaufenden Profilleiste (9) in Berührung stehende unabhängig voneinander temperierbare Zonen unterteilt ist.

3. Vorrichtung nach Anspruch 2, dadurch gekennzeichnet, daß eine der Zonen aus einem Werkzeugeinsatz (6) besteht, der in eine Ausnehmung (5) am Randbereich der Werkzeugöffnung (2) eingesetzt ist.

4. Vorrichtung nach Anspruch 2 oder 3, gekennzeichnet durch ein am Austrittsbereich des Extrusionswerkzeuges (1) angeordnetes, aus hochwärmeleitfähigem Material gebildetes kühl- oder heizmitteldurchflossenes Vorsatzelement (7), welches einstückig und materialeinheitlich mit dem Werkzeugeinsatz (6) ausgebildet ist.

0047839

1/1

Fig. 1

Mattzone

Fig. 2